# EUROPEAN PATENT APPLICATION

(11) **EP 2 555 581 A2**
(43) Date of publication of application: **06.02.2013**
(21) Application number: 11189679.1
(22) Date of filing: 18.11.2011
(51) Int. Cl.: H04W 76/02

(54) **Method of increasing data throughput of a wireless network system by dynamically adjusting window size of communication protocol**

(30) Priority: 03.08.2011 TW 100127532
(71) Applicant: Acer Incorporated, New Taipei City 221 (TW)
(72) Inventor: Cheng, Tsung-Yo, 221 New Taipei City (TW)
(74) Representative: Becker Kurig Straus

(57) **Abstract**

In a wireless network system which adopts a multi-layer data transmission structure, a wireless channel is established between a user equipment and a base station. A signal transmission status of a first layer is measured for adjusting a data transmission parameter of a second layer accordingly. The second layer is hierarchically higher than the first layer according to the multi-layer data transmission structure

## Description

### Field of the Invention

The present invention is related to a method of increasing data throughput of a wireless network system according to the pre-characterizing clause of claim 1.

### Background of the Invention

Electronic equipment, such as desktop computers, notebook computers, personal digital assistants (PDAs), or smart phones, provide easy access to a network. In order for electronic equipment having varying specifications to be able to communicate with the same network, an OSI (Open Systems Interconnection) network model has been provided by ISO (International Organization for Standardization) for managing the network intercommunication between two systems. Meanwhile, transmission control protocol (TCP) /Internet protocol(IP) , developed by IETF (Internet engineer task force) according to DoD (department of defense) model, is the most common standard network protocol.

The OSI model and the TCP/IP define various layers for network transmission. In a network environment, each layer of a receiving device or a transmitting device is configured to recognize data from the same layer. Data packets are sequentially transmitted from the top layer to the bottom layer of a transmitting network device and then to a receiving network device using application programs. After receiving data packages, the receiving network device sequentially unpacks each data package, which is then distributed to a corresponding layer of the receiving network device. Assigned for different tasks, each layer may have varying transmission parameters and buffer sizes. Data stall may happen when transmitting data from a fast higher layer to a slow lower layer. Also, a fast lower layer may not be able to improve data throughput if a higher layer encounters insufficient data buffer or transmission blockages.

### Summary of the Invention

This in mind, the present invention aims at providing a method of increasing data throughput of a wireless network system by dynamically adjusting window size of communication protocol.

This is achieved by a method of data transmission between a user equipment and a base station in a wireless network system according to claim 1. The dependent claims pertain to corresponding further developments and improvements.

As will be seen more clearly from the detailed description following below, the claimed method of data transmission between a user equipment and a base station in a wireless network system having a multi-layer structure includes establishing a wireless transmission channel between the user equipment and the base station; measuring a signal transmission status associated with a first layer in the wireless transmission channel; and adjusting a data transmission parameter of a second layer in the wireless transmission channel, wherein the second layer is hierarchically higher than the first layer in the multi-layer structure.

### Brief Description of the Drawings

In the following, the invention is further illustrated by way of example, taking reference to the accompanying drawings. Thereof
FIG. 1 is a diagram illustrating a multi-layer structure according to the OSI model;
FIG. 2 is a flowchart illustrating a method for data transmission in a wireless network system;
FIG. 3 is a table illustrating the operation of the present invention;
FIG. 4 is a diagram illustrating the operation of the present invention in an uplink mode; and
FIG. 5 is a diagram illustrating the operation of the present invention in a downlink mode.

### Detailed Description

The present invention provides a method of data transmission in a wireless network system. When a user equipment and a base station in the wireless network system are in communication using a multi-layer structure, the present invention may improve overall data throughput.

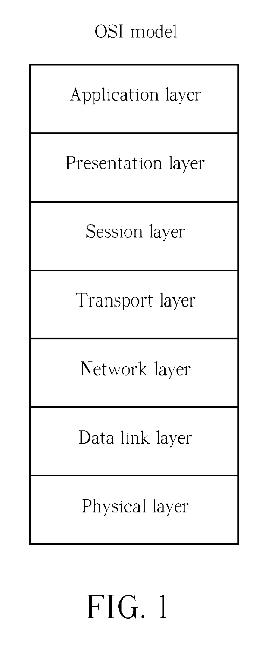

FIG. 1 is a diagram illustrating a multi-layer structure according to the OSI model. From bottom to top, Layer 1∼Layer 7 sequentially include a physical layer, a data link layer, a network layer, a transport layer, a session layer, a presentation layer, and an application layer. The 1^{st} layer, the physical layer, is defined as the bottom layer closest to hardware devices, while the 7^{th} layer, the application layer, is defined as the top layer closest to software programs.

The physical layer and the data link layer in the OSI model are configured to handle network hardware connection and may be implemented on various network access interfaces, such as Ethernet, Token-Ring or Fiber Distributed Data Interface (FDDI), etc. The network layer in the OSI model is configured to deliver messages between a transmitting device and a receiving device using various protocols, such as identifying addresses or selecting transmission path using IP, Address Resolution Protocol (ARP), Reverse Address Resolution Protocol RARP or Internet Control Message Protocol (ICMP). The transport layer in the OSI model is configured to deliver messages between different hosts using TCP and User Datagram Protocol (UDP). The session layer, the presentation layer, and the application layer in the OSI model are configured to provide various application protocols, such as TELNET, File Transfer Protocol (FTP), Simple Mail Transfer Protocol (SMTP), Post Office Protocol 3 (POP3), Simple Network Management Protocol (SNMP), Network News Transport Protocol (NNTP), Domain Name System (DNS), Network Information Service (NIS), Network File System (NFS), and Hypertext Transfer Protocol (HTTP). The present invention may be applied to any wireless network system having a multi-layer structure for data transmission. FIG. 1 is only for illustrative purpose, and does not limit the scope of the present invention.

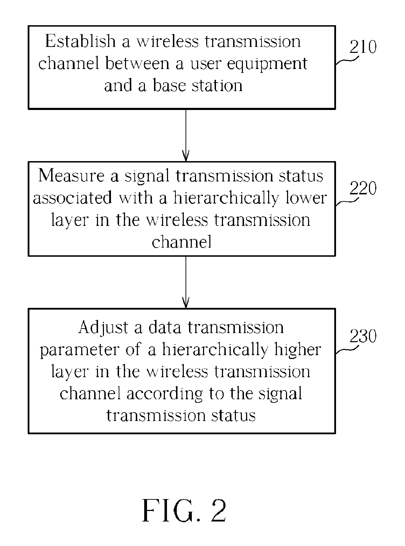

FIG. 2 is a flowchart illustrating a method of data transmission in a wireless network system. The flowchart in FIG. 2 includes the following steps:
Step 210: establish a wireless transmission channel between a user equipment and a base station;
Step 220: measure a signal transmission status associated with a hierarchically lower layer in the wireless transmission channel; and
Step 220: adjust a data transmission parameter of a hierarchically higher layer in the wireless transmission channel according to the signal transmission status.

In the multi-layered OSI network system which adopts TCP/IP, the lower layer may be the physical layer, while the higher layer may be the transport layer or the network layer. The signal transmission status may be acquired by measuring a channel quality indicator (CQI) when corresponding layers of the user equipment and the base station are in communication. The data transmission parameter may be a protocol window size of the transport layer or the network layer.

For example, the transport layer in the OSI model normally adopts TCP for handling packet sequence number, acknowledgement packets, checksum and re-transmission. The network layer in the OSI model normally adopts IP for handling addressing, routing, service type specification, packet fragmentation, packet reassembling and security. Therefore, the data transmission parameter may be TCP/IP window size which indicates the maximum packet number permitted to be transmitted without waiting for acknowledgement packets. However, the present invention may adjust other parameters associated with data transmission rate according to other parameters associated with signal transmission status. CQI and TCP/IP window size are merely illustrative embodiments, and do not limit the scope of the present invention.

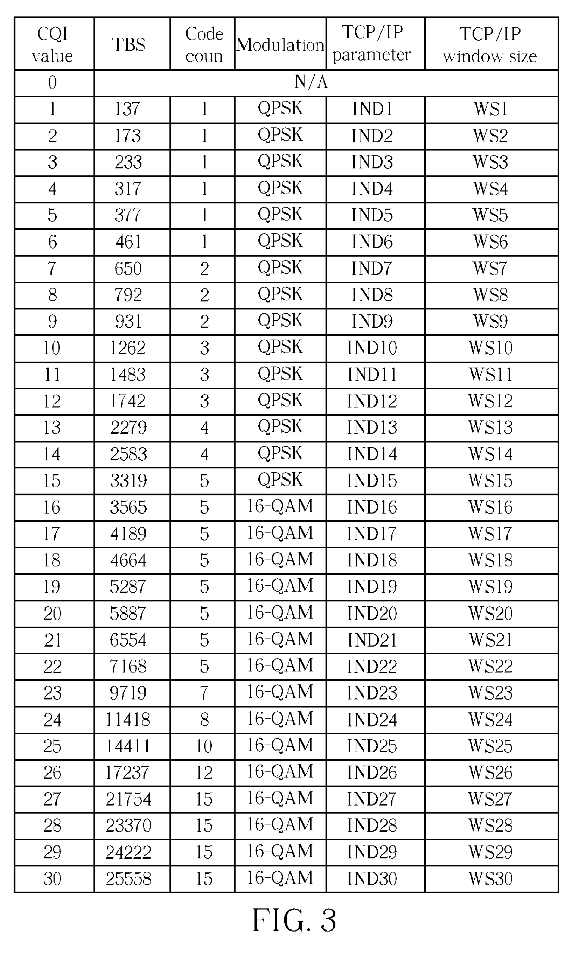

A high-speed downlink packet access (HSDPA) network system may adopt various types of user equipment, each of which is provided with a corresponding CQI table. FIG. 3 is a table illustrating the present invention using a category 10 UE. The CQI table corresponding to category 10 UE is depicted on the left side of FIG. 3, while the two columns on the right side of the table in FIG. 3 illustrates how step 220 is executed. In the CQI table depicted on the left side of FIG. 3, the CQI value is between 0 and 30, and related to parameters of the wireless transmission channel, such as signal-to-noise ratio (SNR), signal-to-interference plus noise ratio (SINR), or signal-to-noise plus distortion ratio (SNDR). Measured during intercommunication between corresponding layers of the user equipment and the base station, a larger CQI value indicates a better signal transmission status. Each CQI value corresponds to specific settings, wherein transport block size (TBS) represents the amount of data packets which are transmitted to the user equipment, code count represents the amount of high speed physical downlink shared channel (HS-PDSCH), and data packets maybe transmitted using a quadrature phase-shift keying (QPSK) modulation or a high-speed 16 quadrature amplitude modulation (16-QAM) modulation.

The right side of the table in FIG. 3 illustrates a method of executing step 220 in the present invention. In the present invention, each measured CQI value may be mapped to a corresponding TCP/IP parameter, and each TCP/IP parameter may be mapped to a corresponding TCP/IP window size. In FIG. 3, lNDl -lND30 represent the TCP/IP parameters and WS1-WS30 represent the TCP/IP window sizes, wherein IND1 ≦ IND2 ≦ ... ≦ lND30 and WS1 ≦ WS2 ≦ ... ≦ WS30.

As known to those skilled in the art, the concept of a sliding window is used in TCP/IP for allowing multiple packets to be transmitted before the receiving device accepts acknowledgement packets. This kind of multi-transmission-multi-acknowledgement technology can increase network bandwidth utilization and the data transmission speed. Simply speaking, a receiving device may inform a transmitting device of the available buffer size for receiving packets using TCP/IP window size. The transmitting device may decrease its data throughput when TCP/IP window size drops, or increase its data throughput when TCP/IP window size rises. Therefore, the present invention may optimize the data transmission between different layers by dynamically adjusting the TCP/IP window size of the higher layer according to the measured CQI value of the lower layer.

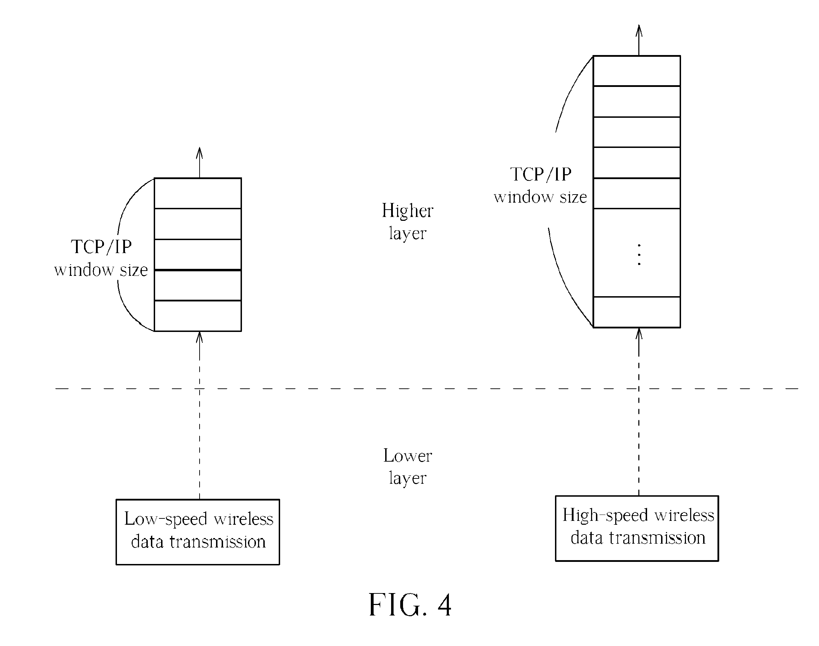

FIG. 4 is a diagram illustrating the operation of the present invention in an uplink mode. The left side of FIG. 4 illustrates an embodiment when a smaller CQI value is measured in step 220, indicating that the lower layer can only provide low-speed wireless data transmission. Under such circumstance, the higher layer with a higher transmission speed only consumes more power without improving the overall uplink data throughput. Therefore, the present invention may reduce the TCP/IP window size of the higher layer.

The right side of FIG. 4 illustrates an embodiment when a larger CQI value is measured in step 220, indicating that the lower layer can provide high-speed wireless data transmission. Under such circumstances, the overall uplink data throughput may not be improved if the higher layer only has a low transmission speed. Therefore, the present invention may increase the TCP/IP window size of the higher layer.

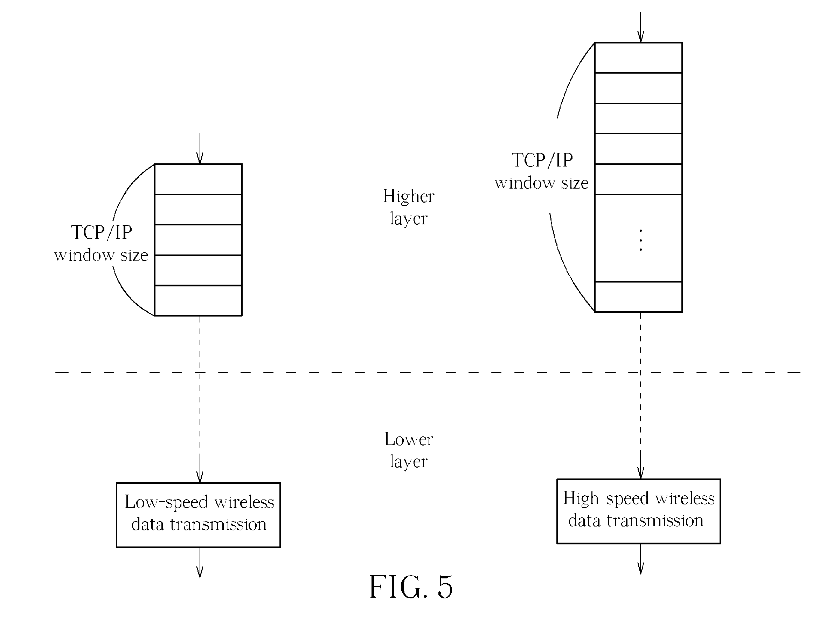

FIG. 5 is a diagram illustrating the operation of the present invention in a downlink mode. The left side of FIG. 5 illustrates an embodiment when a smaller CQI value is measured in step 220, indicating that the lower layer can only provide low-speed wireless data transmission. Under such circumstances, the higher layer with a higher transmission speed only consumes more power or causes data stall without improving the overall downlink data throughput. Therefore, the present invention may reduce the TCP/IP window size of the higher layer.

The right side of FIG. 5 illustrates an embodiment when a larger CQI value is measured in step 220, indicating that the lower layer can provide high-speed wireless data transmission. Under such circumstance, the overall downlink data throughput may not be improved if the higher layer only has a low transmission speed. Therefore, the present invention may increase the TCP/IP window size of the higher layer.

In conclusion, the present invention may provide a method of data transmission in a wireless network system. When a user equipment and a base station in the wireless network system are in communication using a multi-layer structure, the present invention may dynamically adjust the data transmission parameter of a higher layer according to the transmission status of a lower layer. By optimizing the data transmission between different layers, the present invention may improve network resource utilization and overall data throughput.

## Claims

1. A method of data transmission between a user equipment and a base station in a wireless network system having a multi-layer structure, comprising:
establishing a wireless transmission channel between the user equipment and the base station;
**characterized by**
measuring a signal transmission status associated with a first layer in the wireless transmission channel; and
adjusting a data transmission parameter of a second layer in the wireless transmission channel, wherein the second layer is hierarchically higher than the first layer in the multi-layer structure.

2. The method of claim 1, further **characterized by**:
adjusting the data transmission parameter of the second layer in an uplink mode when communicating with a third layer in the wireless transmission channel according to the signal transmission status, wherein the third layer is hierarchically higher than the second layer in the multi-layer structure.

3. The method of claim 1, further **characterized by**:
adjusting the data transmission parameter of the second layer in a downlink mode when communicating with the first layer in the wireless transmission channel according to the signal transmission status.

4. The method of claim 1, further **characterized by**:
measuring the signal transmission status by measuring a channel quality indicator of the first layer.

5. The method of claim 1, further **characterized by**:
adjusting the data transmission parameter of the second layer by adjusting a transmission control protocol window size.

6. The method of claim 1, further **characterized by**:
adjusting the data transmission parameter of the second layer by adjusting an Internet protocol window size.
